## Europäisches Patentamt

## European Patent Office

## Office européen des brevets

(11) Veröffentlichungsnummer: **0 131 134**
**B1**

(12) **EUROPÄISCHE PATENTSCHRIFT**

(45) Veröffentlichungstag der Patentschrift:
**05.10.88**

(51) Int. Cl.⁴: **B 24 B 35/00**

(21) Anmeldenummer: **84106247.4**

(22) Anmeldetag: **01.06.84**

(54) **Verfahren und Maschine zum Formschleifen für die funkenerosive Bearbeitung von Werkstücken.**

(30) Priorität: **03.06.83 DE 3320129**

(43) Veröffentlichungstag der Anmeldung:
**16.01.85 Patentblatt 85/3**

(45) Bekanntmachung des Hinweises auf die Patenterteilung:
**05.10.88 Patentblatt 88/40**

(84) Benannte Vertragsstaaten:
**CH DE FR GB IT LI NL SE**

(56) Entgegenhaltungen:
**CH - A - 569 550**
**DE - A - 2 603 614**
**DE - A - 2 649 570**
**DE - A - 2 827 543**

**WERKSTATT UND BETRIEB, Band 115, Nr. 10, 1982,
Seiten 663-666, München; H.C. HAUSERMANN
"Formschleifen - Alternative für EDM -
Grafitelektroden"**

(73) Patentinhaber: **AEG - Elotherm GmbH, Hammesberger
Strasse 31, D-5630 Remscheid-Hasten (DE)**

(72) Erfinder: **Gosger, Peter, Ing. grad., Westhausener
Strasse 3, D-5650 Solingen 25 (DE)**
Erfinder: **Stengel, Edgar, Erdelenstrasse 35,
D-5630 Remscheid (DE)**
Erfinder: **Fey, Franz-Josef, Ing. grad., Reinshagener
Strasse 117, D-5630 Remscheid (DE)**

(74) Vertreter: **Patentanwaltsbüro Cohausz & Florack,
Postfach 14 01 47, D-4000 Düsseldorf 1 (DE)**

**Beschreibung**

Die Erfindung bezieht sich auf eine Maschine zum Formschleifen von gesenkartig ausgebildeten und als Patrize oder Matrize verwendbaren Werkstücken, insbesondere Grafitelektroden für die funkenerosive Bearbeitung von Werkstücken, mit einem der am Werkstück herzustellenden Form entsprechenden, in seinen Abmessungen jedoch etwas kleineren Formschleifwerkzeug, das geradlinig auf das Werkstück zu absenkbar ist, mit einem Träger für das Formschleifwerkzeug und einem Träger für das Werkstück, sowie einem Antrieb für die Senkbewegung und einem als Kurbelgetriebe ausgebildeten Antrieb für eine Kreisbewegung des in einer zur Senkrichtung senkrechten Ebene zweidimensional geführten Werkstückträgers, wobei der Radius der Kreisbahn mittels eines Kurbelzapfens des Kurbelgetriebes einstellbar ist.

Eine solche Maschine ist aus der in der CH-PS 569 550 beschriebenen Vorrichtung zur Formgebung einer Elektrode für die Funkenerosionsbearbeitung bekannt. Bei dieser Maschine ist das Werkstück auf einem Kreuzschlitten aufzuspannen, so dass es in einer Ebene zweidimensional bewegt werden kann. Zur Führung des Werkstückes auf einer Kreisbahn dient ein am Werkstückträger angreifender Kurbelzapfen eines Kurbelgetriebes. Bei Stillstand des Antriebes lässt sich der Kurbelzapfen, der in einer schwalbenschwanzförmigen Führung des Kurbelarms gehalten ist, bezüglich seiner Exzentrizität einstellen.

Im Vergleich zu anderen Maschinen, die bei spanabhebenden Verfahren zum Herstellen von gesenkartigen Werkstücken verwendet werden, bestehen die Vorteile einer solchen Maschine in dem geringen Zeitaufwand und in der Genauigkeit insbesondere bei der Bearbeitung von Werkstücken mit über die gesamte Senktiefe konstantem Querschnitt. Sollten jedoch Werkstücke mit in Senkrichtung sich verjüngendem Querschnitt, beispielsweise einem kugeligen Querschnitt, mit der bekannten Maschine hergestellt werden, dann ist es prinzipiell erforderlich, den Radius der Kreisbewegung im wesentlichen nach Massgabe der engsten Querschnittsstelle des Werkstücks zu dimensionieren, wobei die genannten Vorteile dann aber wieder weitgehend entfallen.

Von der funkenerosiven Bearbeitung von Werkstücken her ist es aus der DE-OS 2 603 614 schon bekannt, durch numerische Steuerung den Radius der Kreisbewegung mit zunehmender Senktiefe zu verkleinern, doch ist eine solche Maschine wegen der um etwa zwei Zehnerpotenzen höheren Drehzahlen der Kreisbewegung nicht ohne weiteres zum Formschleifen zu verwenden.

Der Erfindung liegt demgegenüber die Aufgabe zugrunde, eine Maschine zum Formschleifen von Werkstücken, insbesondere Grafitelektroden zu schaffen, bei der die Bearbeitungszeit auch dann kurz und die Genauigkeit hoch ist, wenn es sich um Werkstücke mit sich in Senkrichtung des Werkzeuges verjüngendem Querschnitt handelt.

Diese Aufgabe wird bei einer ersten Maschine dieser Art dadurch gelöst, dass die Achse des Kurbelzapfens zur Achse der Kurbelwelle unter einem von 0 bzw. 180° verschiedenen Winkel verläuft und der Kurbelzapfen im Träger in Richtung seiner Achse verschiebbar sowie die Kurbelwelle in Richtung ihrer Achse verstellbar ist. Eine solche Maschine zeichnet sich durch ihre besonders einfache konstruktive Gestaltung des Kurbelgetriebes aus.

Bei einer zweiten Maschine derselben Gattung wird die Aufgabe dadurch gelöst, dass zum Verstellen der Exzentrizität des Kurbelzapfens ein zusammengesetztes Planetengetriebe aus zwei Planetenradsätzen vorgesehen ist, die parallel zur Kurbelwelle in einem auf ihr drehbar gelagerten Steg drehbar sind und von denen der eine Satz mit einem drehfest auf der Kurbelwelle sitzenden Sonnenrad und einem feststehenden und zu diesem koaxial angeordneten Innenzahnrad kämmt und von denen der andere Satz mit einem drehbar auf der Kurbelwelle gelagerten Sonnenrad und einem koaxial zu dieser gelagerten und drehantreibbaren Innenzahnrad kämmt, und dass mit dem drehbar gelagerten Sonnenrad ein im Kurbelarm parallel zur Kurbelwelle drehbar gelagertes Ritzel kämmt, auf dessen Welle die Schnecke eines Schneckengetriebes sitzt, dessen Schneckenrad eine den Kurbelzapfen quer zur Kurbelwelle verstellende Gewindespindel antreibt.

Bei einer dritten Maschine derselben Gattung wird die Aufgabe dadurch gelöst, dass zum Verstellen der Exzentrizität des Kurbelzapfens ein sich gemeinsam mit der Kurbelwelle drehender Stellmotor vorgesehen ist, der über ein Schneckengetriebe eine den Kurbelzapfen quer zur Kurbelwelle verstellende Gewindespindel antreibt. Bei dieser Maschine ist der Stellmotor vorzugsweise ein Elektromotor mit konzentrisch zur Kurbelwelle angeordneten Schleifringen für ortsfeste Stromführungskontakte.

Bei sämtlichen drei Lösungen ist gewährleistet, dass ohne Unterbrechung der Kreisbewegung die Exzentrizität des Kurbelzapfens verkleinert werden kann. Es ergeben sich jeweils kompakte Einheiten zur Veränderung der Exzentrizität des Kurbelzapfens und damit zur Verstellung des Radius der Kreisbewegung des Werkzeugtisches, ohne dass nennenswerte Fliehkräfte auftreten können.

Zur Beruhigung des Kurbelantriebes während der Kreisbewegung kann auch einer Ausgestaltung der Erfindung der Kurbelarm eine Ausgleichsmasse tragen, die – bezogen auf die Achse der Kurbelwelle – gegenüber dem Kurbelzapfen um 180° versetzt angeordnet ist. Um die Ausgleichsmasse möglichst klein zu halten, sollte die wirksame Kurbelarmlänge der Ausgleichsmasse grösser als die wirksame Kurbelarmlänge des Kurbelzapfens sein.

Im folgenden wird die Erfindung anhand von Ausführungsbeispiele darstellenden Zeichnungen näher erläutert.

Im einzelnen zeigen:

Fig. 1 eine erfindungsgemässe, schematisch dargestellte Maschine zum Formschleifen in einer Seitenansicht,

Fig. 2 einen Werkstückträger mit Kurbelgetriebe für die Maschine nach Fig. 1 im Axialschnitt,

Fig. 3 eine alternative Ausführung des Werkstückträgers und des Kurbelgetriebes für die Maschine nach Fig. 1 im Axialschnitt,

Fig. 4 das Kurbelgetriebe gemäss Fig. 3 im Schnitt gemäss Linie I–I in Fig. 3,

Fig. 5 den Werkstückträger gemäss Fig. 2 und 3, jedoch mit einer alternativen Ausführung des Kurbelgetriebes in Seitenansicht,

Fig. 6 eine Kreuztischführung für den Werkstückträger in der Draufsicht und

Fig. 7 das Blockschaltbild der zu der Maschine nach Fig. 1 gehörigen Steuer- und Regeleinrichtung für den Vorschub des Schleifwerkzeuges und die Verstellung der Exzentrizität der Kurbelgetriebe nach den Fig. 2 bis 5.

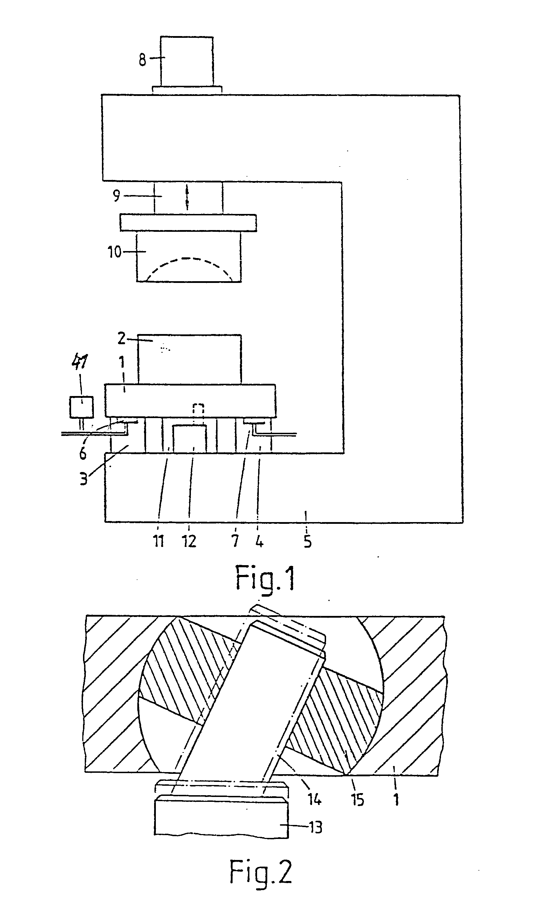

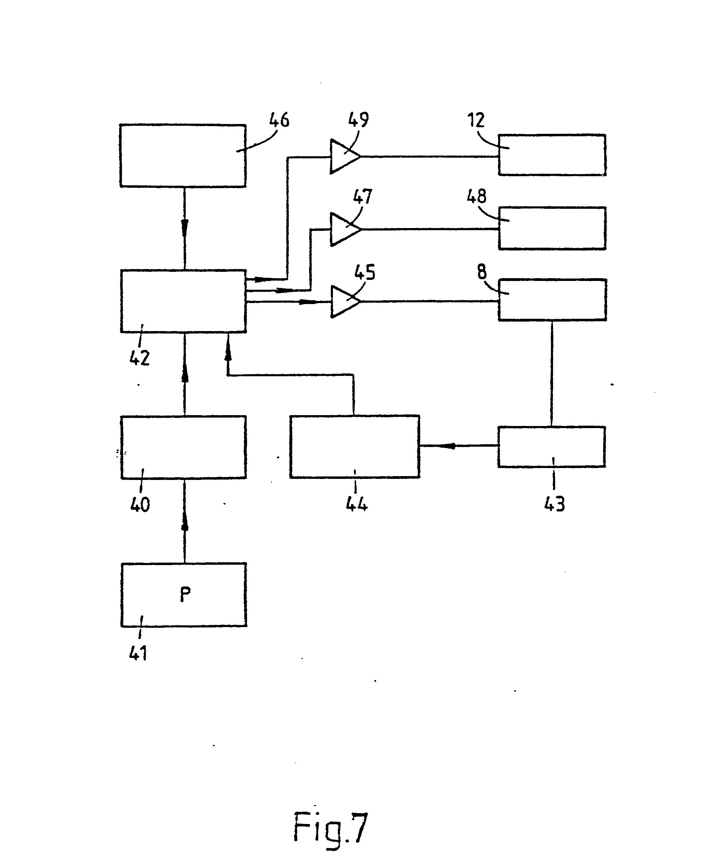

In Fig. 1 ruht ein Werkstückträger 1 für eine zu bearbeitende Grafitelektrode 2 auf Stützen 3, 4 eines Maschinenständers 5. Die Stützen 3, 4 tragen den Träger 1 auf einem hydrostatischen Druckpolster, das durch Zufuhr von Druckmittel in den dem Träger 1 zugekehrten Stirnflächen der Stützen 3, 4 vorhandene Hohlräume 6, 7 aufgebaut wird. Der Maschinenständer 5 trägt an einem durch einen Motor 8 heb- und senkbaren Träger 9 ein Schleifwerkzeug 10, das als Hohlschale ausgebildet ist. Der auf den Stützen 3, 4 ruhende Träger 1 weist eine Kreuztischführung 11 auf (siehe Fig. 7), die eine zweidimensionale Verlagerung des Trägers 1 in einer Ebene zulässt, nicht aber eine Rotation des Trägers 1. Mittels eines am Träger 1 angreifenden Kurbelgetriebes 12 lässt sich der Träger 1 auf einer Kreisbahn bewegen. Der Radius dieser Kreisbahn ist, wie noch im einzelnen anhand weiterer Figuren zu erläutern sein wird, stufenlos bis auf Null einstellbar. Die Drehfrequenz der Kurbel beträgt etwa 1000 Umdrehungen/min.

Beim Ausführungsbeispiel der Fig. 2 besteht das Kurbelgetriebe 12 aus einer angetriebenen Kurbelwelle 13, die am freien Ende einen schief zur Kurbelwellenachse angeordneten Kurbelzapfen 14 aufweist. Der Zapfen 14 ist drehbar und verschieblich in einem Kugelkopf 15 gelagert, der in einer sphärischen Ausnehmung des Trägers 1 sitzt. Durch axiale Verstellung der Kurbelwelle 13 wird der Zapfen 14 im Kugelkopf 15 verschoben. Dadurch verlagert sich der Träger 1, was eine Veränderung der Exzentrizität des Kurbelzapfens 14 bedeutet. Bei diesem Kurbelgetriebe ist es also möglich, bei sich drehender Kurbelwelle 13 allein durch eine einfache Axialverstellung der Kurbelwelle 13 die wirksame Kurbelarmlänge zu verändern.

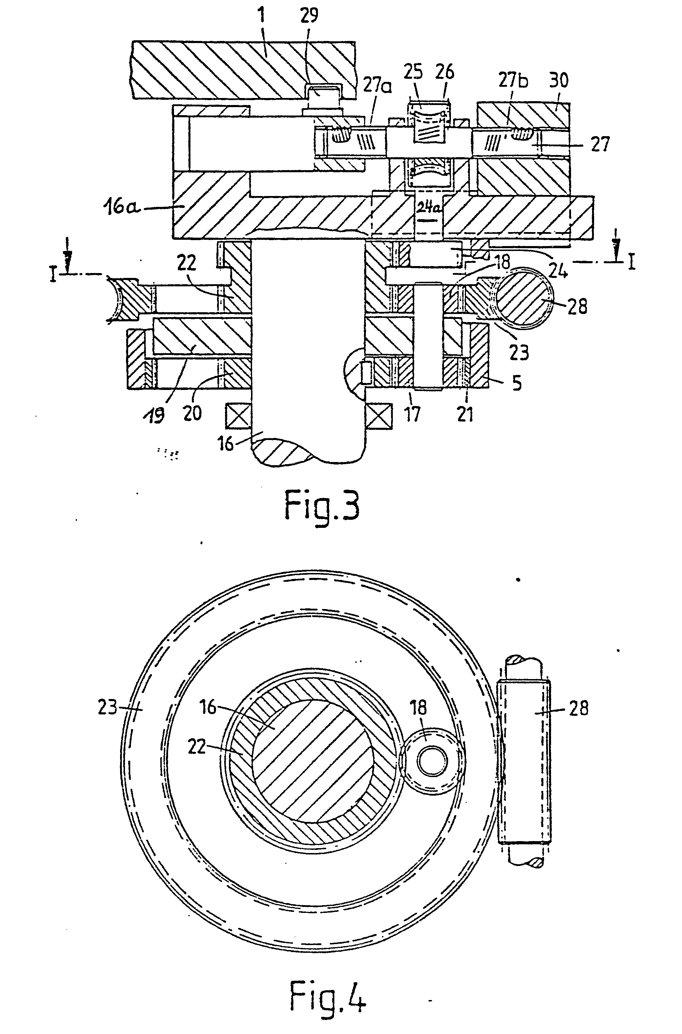

Bei dem Kurbelgetriebe gemäss Fig. 3 und 4 ist auf einer angetriebenen Kurbelwelle 16 ein zusammengesetztes Umlaufrädergetriebe gelagert. Zwei Planetenradsätze 17, 18 sind drehbar in einem gemeinsamen, auf der Kurbelwelle 16 verdrehbaren Steg 19 gelagert. Der Planetenradsatz 17 steht einerseits mit einem auf der Kurbelwelle 16 drehfest angeordneten Sonnenrad 20 und andererseits mit einem starr im Maschinenständer 5 angeordneten Innenzahnrad 21 in Eingriff.

Der andere Planetenradsatz 18 steht einerseits mit einem auf der Kurbelwelle 16 verdrehbar gelagerten Sonnenrad 22 und andererseits mit einem Innenzahnrad 23 in Eingriff, das durch eine Einstellschnecke 28 um die Kurbelwellenachse verdrehbar ist. Das Sonnenrad 22 trägt neben der Verzahnung, mit der der Planetenradsatz 18 in Eingriff steht, eine zweite Verzahnung, die mit einem Ritzel 24 in Eingriff steht, das exzentrisch im Kurbelarm 16a der Kurbelwelle 16 parallel zu dieser drehbar gelagert ist. Mit dem Ritzel 24 ist über eine Welle 24a drehfest eine Schnecke 25 verbunden, die mit einem Schneckenrad 26 in Eingriff steht. Das Schneckenrad 26 treibt eine in radialer Richtung zur Kurbelwelle 16 verlaufende Gewindespindel 27, mit der der Kurbelzapfen 29 für den Träger 1 und eine Ausgleichsmasse 30 radial entgegengesetzt und um verschieden grosse Wege verstellbar sind. Dies wird durch Rechts- und Linksgang sowie durch verschieden grosse Steigungen der dem Kurbelzapfen 29 und der Ausgleichsmasse 30 zugeordneten Gewindeabschnitte 27a, 27b, erreicht.

Das soweit beschriebene Kurbelgetriebe lässt sich bezüglich der Exzentrizität seines Kurbelzapfens 29 bzw. der wirksamen Kurbelarmlänge auf folgende Art und Weise einstellen:

Unter der Annahme, dass das Sonnenrad 23 durch die zugehörige äussere Einstellschnecke 28 drehfest gehalten wird, wälzen sich die Planetenradsätze 17, 18 auf den Sonnenrädern 20, 22 und den Innenzahnrädern 21, 23 ab, ohne dass es zu einer Verdrehung des Sonnenrades 22 gegenüber der Kurbelwelle 16 kommt. Das bedeutet, dass das Ritzel 24 keine Verdrehbewegung erfährt. Folglich dreht sich auch die Gewindespindel 27 nicht und es bleibt bei der eingestellten Kurbelarmlänge des auf der Gewindespindel 27 sitzenden Kurbelzapfens 29. Sobald aber die Einstellschnecke 28 verdreht wird, ergibt sich auch eine Verdrehung des Sonnenrades 22 gegenüber der Kurbelwelle 16. Folglich wird das Ritzel 24 und damit auch die Gewindespindel 27 im Sinne einer Änderung der wirksamen Kurbelarmlänge verstellt.

Die Steuerung der Senkbewegung des Trägers 9 für das Werkzeug 10 und die Einstellung der Exzentrizität des Kurbelzapfens 14, 29 bzw. dessen wirksamer Kurbelarmlänge erfolgt mit der in Fig. 7 dargestellten Steuer- und Regeleinrichtung. Ein Ist-Wertgeber 40 liefert in Abhängigkeit von dem mit einem Fühler 41 festgestellten hydrostatischen Druck an einen Rechner 42 mit einer Regeleinrichtung für einen Soll-Ist-Wertvergleich ein Signal. Ein an den Motor 8 oder den Träger 9 angekoppelter Fühler 43 liefert an einen programmierten Ist-Wertgeber 44 ein Signal für die Senktiefe. Der Geber 44 liefert an den Rechner 42 einen von der Senktiefe abhängigen Soll-Wert, der mit dem Ist-Wert für den Druck verglichen wird. In Abhängigkeit von diesem Soll-Ist-Wertvergleich wird über einen Verstärker 45 die Vorschubgeschwindigkeit des Motors 8 eingestellt. Ein den Rechner 42 ansteuerndes Zeitglied 46 liefert an den Rechner 42 Signale für den Vorschub und den Rückhub.

Der Rechner 42 liefert über einen weiteren Verstärker 47 an einen Stellmotor 48 während der Rückhübe in Abhängigkeit von der Senktiefe Stellsignale. Ein solcher Motor 48 treibt z.B. bei dem Kurbelgetriebe gemäss Fig. 3 die Einstellschnecke 28 an. Der Rechner 42 steuert ferner über einen Verstärker 49 das Kurbelgetriebe 12 derart, dass während des Rückhubs und vor der Verstellung des Radius die Drehzahl der Kurbelwelle 16 vermindert wird. Bei Drehung der Einstellschnecke 28 werden der Kurbelzapfen 29 und die Ausgleichsmasse 30 gegensinnig und um verschiedene Weglängen im Sinne einer Änderung der wirksamen Kurbelarmlängen verstellt. Wegen des grösseren Verstellweges der Ausgleichsmasse 30 im Vergleich zu dem Verstellweg des Kurbelzapfens 29 lässt sich die grosse Masse des Trägers 1 und des zu bearbeitenden Werkstückes 2 durch die kleinere Masse der Ausgleichsmasse 30 ausgleichen.

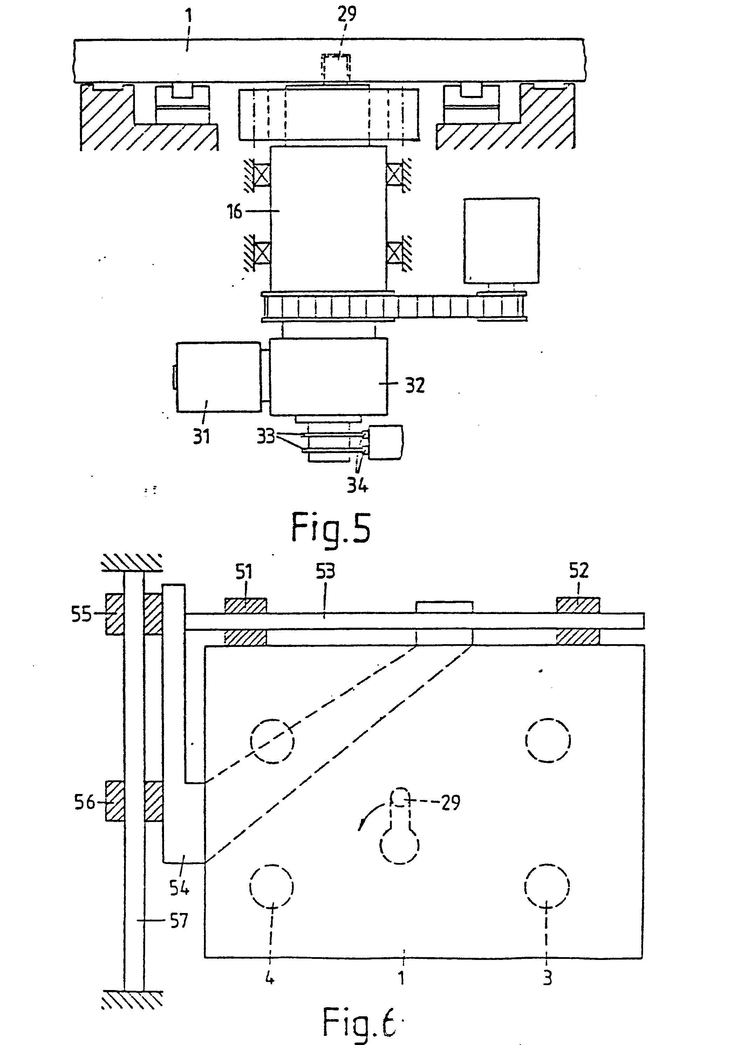

Das in Fig. 5 dargestellte Ausführungsbeispiel unterscheidet sich von dem in den Fig. 3 und 4 dargestellten Ausführungsbeispiel nur bezüglich der Teile, mit denen die für die Verstellung des Kurbelzapfens 29 und der Ausgleichsmasse 30 erforderliche Drehbewegung der Schnecke 25 erzeugt wird. In diesem Fall wird die Drehbewegung der Schneckenwelle 24a von einem elektrischen Stellmotor 31 über ein Getriebe 32 erzeugt. Die Stromzufuhr zu dem Stellmotor 31 erfolgt über konzentrisch zur Kurbelwelle 16 angeordnete Schleifringe 33 und ortsfeste Schleifkontakte 34.

Die Funktion eines mit einem einzigen Kurbelzapfen 29 in einer Ebene in alle Richtungen ohne Eigendrehung verstellbaren Trägers 1 ergibt sich aus Fig. 6. Der Träger 1 ruht auf den Stützen 3, 4. Mittels des Kurbelzapfens 29 kann der Träger 1 auf einer Kreisbahn bewegt werden. Dabei wird er nach Art einer Kreuztischführung mittels Führungsbuchsen 51, 52 auf einer Schiene 53 linear geführt. Die Schiene 53 ihrerseits ist mittels eines Halters 54 und Führungsbuchsen 55, 56 auf einer ortsfesten Schiene 57 linear geführt.

**Patentansprüche**

1. Maschine zum Formschleifen von gesenkartig ausgebildeten und als Patrize oder Matrize verwendbaren Werkstücken (2), insbesondere Grafitelektroden für die funkenerosive Bearbeitung von Werkstücken, mit einem der am Werkstück (2) herzustellenden Form entsprechenden, in seinen Abmessungen jedoch etwas kleineren Formschleifwerkzeug (10), das geradlinig auf das Werkstück (2) zu absenkbar ist, mit einem Träger (9) für das Formschleifwerkzeug (10) und einem Träger (1) für das Werkstück (2), sowie einem Antrieb (8) für die Senkbewegung und einem als Kurbelgetriebe (12) ausgebildeten Antrieb für eine Kreisbewegung des in einer zur Senkrichtung senkrechten Ebene zweidimensional geführten Werkstückträgers (1), wobei der Radius der Kreisbahn mittels eines Kurbelzapfens (14) des Kurbelgetriebes (12) einstellbar ist, dadurch gekennzeichnet, dass die Achse des Kurbelzapfens (14) zur Achse der Kurbelwelle (13) unter einem von 0 bzw. 180° verschiedenen Winkel verläuft und der Kurbelzapfen (14) im Träger (1) in Richtung seiner Achse verschiebbar sowie die Kurbelwelle (13) in Richtung ihrer Achse verstellbar ist.

2. Maschine zum Formschleifen von gesenkartig ausgebildeten und als Patrize oder Matrize verwendbaren Werkstücken (2), insbesondere Grafitelektroden für die funkenerosive Bearbeitung von Werkstücken, mit einem der am Werkstück (2) herzustellenden Form entsprechenden, in seinen Abmessungen jedoch etwas kleineren Formschleifwerkzeug (10), das geradlinig auf das Werkstück (2) zu absenkbar ist, mit einem Träger (9) für das Formschleifwerkzeug (10) und einem Träger (1) für das Werkstück (2), sowie einem Antrieb (8) für die Senkbewegung und einem als Kurbelgetriebe ausgebildeten Antrieb für eine Kreisbewegung des in einer zur Senkrichtung senkrechten Ebene zweidimensional geführten Werkstückträgers (1), wobei der Radius der Kreisbahn mittels eines Kurbelzapfens (29) des Kurbelgetriebes einstellbar ist, dadurch gekennzeichnet, dass zum Verstellen der Exzentrizität des Kurbelzapfens (29) ein zusammengesetztes Planetengetriebe aus zwei Planetenradsätzen (17, 18) vorgesehen ist, die parallel zur Kurbelwelle (16) in einem auf ihr drehbar gelagerten Steg (19) drehbar gelagert sind und von denen der eine Satz (17) mit einem drehfest auf der Kurbelwelle (16) sitzenden Sonnenrad (20) und einem feststehenden und zu diesem koaxial angeordneten Innenzahnrad (21) kämmt und von denen der andere Satz (18) mit einem drehbar auf der Kurbelwelle (16) gelagerten Sonnenrad (22) und einem koaxial zu dieser gelagerten und drehantreibbaren Innenzahnrad (23) kämmt, und dass mit dem drehbar gelagerten Sonnenrad (22) ein im Kurbelarm (16a) parallel zur Kurbelwelle (14) drehbar gelagertes Ritzel (24) kämmt, auf dessen Welle (24a) die Schnecke (25) eines Schneckengetriebes (25, 26) sitzt, dessen Schneckenrad (26) eine den Kurbelzapfen (29) quer zur Kurbelwelle (16) verstellende Gewindespindel (27) antreibt.

3. Maschine zum Formschleifen von gesenkartig ausgebildeten und als Patrize oder Matrize verwendbaren Werkstücken (2), insbesondere Grafitelektroden für die funkenerosive Bearbeitung von Werkstücken, mit einem der am Werkstück (2) herzustellenden Form entsprechenden, in seinen Abmessungen jedoch etwas kleineren Formschleifwerkzeug (10), das geradlinig auf das Werkstück (2) zu absenkbar ist, mit einem Träger (9) für das Formschleifwerkzeug (10) und einem Träger (1) für das Werkstück (2), sowie einem Antrieb (8) für die Senkbewegung und einem als Kurbelgetriebe ausgebildeten Antrieb für eine Kreisbewegung des in einer zur Senkrichtung senkrechten Ebene zweidimensional geführten Werkstückträgers (1), wobei der Radius der Kreisbahn mittels eines Kurbelzapfens (29) des Kurbelgetriebes einstellbar ist, dadurch gekennzeichnet, dass zum Verstellen der Exzentrizität des Kurbelzapfens (29) ein sich gemeinsam mit der Kurbelwelle (16) drehender Stellmotor (31) vorgesehen ist, der über ein Schneckengetriebe (25, 26) eine den Kurbelzapfen (29) quer zur Kurbelwelle (16) verstellende Gewindespindel (27) antreibt.

4. Maschine nach Anspruch 3, dadurch gekennzeichnet, dass der Stellmotor (31) ein Elektromotor mit konzentrisch zur Kurbelwelle (16) angeordneten Schleifringen (33) für ortsfeste Stromzuführungskontakte (34) ist.

5. Maschine nach einem der Ansprüche 1 bis 4, dadurch gekennzeichnet, dass der Kurbelarm (16a) eine Ausgleichsmasse (30) trägt, die – bezogen auf die Achse der Kurbelwelle (13, 16) – gegenüber dem Kurbelzapfen (14, 29) um 180° versetzt angeordnet ist.

6. Maschine nach Anspruch 5, dadurch gekennzeichnet, dass die wirksame Kurbelarmlänge der Ausgleichsmasse (30) grösser als die wirksame Kurbelarmlänge des Kurbelzapfens (14, 29) ist.

**Claims**

1. A machine for the shaped grinding of workpieces (2) constructed after the fashion of dies and usable as male or female dies, more particularly graphite electrodes for the spark erosion processing of workpieces, having: a shaped grinding tool (10) matching the shape to be produced on the workpiece (2) but somewhat smaller in dimensions, which can be lowered rectilinearly on to the workpiece (2); a carrier (9) for the shaped grinding tool (10) and a carrier (1) for the workpiece (2); a drive (8) for the lowering element and a drive taking the form of a crank mechanism (12) for a circular movement of the workpiece carrier (1) guided bidimensionally in a plane perpendicular to the lowering direction, the radius of the circular path being adjustable by means of a crank pin (14) of the crank mechanism (12), characterized in that the axis of the crank pin (14) extends at an angle different from 0 or 180 in relation to the axis of the crank shaft (11), the crank pin (14) can be displaced in the carrier (1) in the direction of its axis, and the crank shaft (13) can be adjusted in the direction of its axis.

2. A machine for the shaped grinding of workpieces (2) constructed after the fashion of dies and usable as male or female dies, more particularly graphite electrodes for the spark erosion processing of workpieces, having: a shaped grinding tool (10) matching the shape to be produced on the workpiece (2) but somewhat smaller in dimensions, which can be lowered rectilinearly on to the workpiece (2); a carrier (9) for the shaped grinding tool (10) and a carrier (1) for the workpiece (2); a drive (8) for the lowering element and a drive taking the form of a crank mechanism (12) for a circular movement of the workpiece carrier (1) guided bidimensionally in a plane perpendicular to the lowering direction, the radius of the circular path being adjustable by means of a crank pin (29) of the crank mechanism (12), characterized in that to adjust the eccentricity of the crank pin (29), a composite sun gear is provided comprising two sets (17, 18) of planet wheels which are mounted in parallel with the crank shaft (17) to rotate in a web (19) rotatably mounted thereon, one set (17) meshing with a sun wheel (20) disposed for co-rotation on the crank shaft (16) and a fixed inner gear wheel (21) disposed coaxially in relation to the sun wheel (20), the other set (18) meshing with a sun wheel (22) rotatably mounted on the crank shaft (16) and a rotatably drivable inner gear wheel (23) mounted coaxially with the crank shaft (16); and meshing with the rotatably mounted sun wheel (22) is a pinion (24) which is mounted to rotate in the crank arm (16a) in parallel with the crank shaft (14) and on whose shaft (24a) the worm (25) of a worm gear (25, 26) is disposed whose worm wheel (26) drives a screwthreaded spindle (27) adjusting the crank pin (29) transversely of the crank shaft (16).

3. A machine for the shaped grinding of workpieces (2) constructed after the fashion of dies and usable as male or female dies, more particularly graphite electrodes for the spark erosion processing of workpieces, having: a shaped grinding tool (10) matching the shape to be produced on the workpiece (2) but somewhat smaller in dimensions, which can be lowered rectilinearly on to the workpiece (2); a carrier (9) for the shaped grinding tool (10) and a carrier (1) for the workpiece (2); a drive (8) for the lowering element and a drive taking the form of a crank mechanism (12) for a circular movement of the workpiece carrier (1) guided bidimensionally in a plane perpendicular to the lowering direction, the radius of the circular path being adjustable by means of a crank pin (14) of the crank mechanism (12), characterized in that to adjust the eccentricity of the crank pin (29), an adjusting motor rotating jointly with the crank shaft (16) is provided which drives via a worm gear (25, 26) a screwthreaded spindle (27) adjusting the crank pin (29) transversely of the crank shaft (16).

4. A machine according to claim 3, characterized in that the adjusting motor (31) is an electric motor having slip rings (33) for fixed current supply contacts (34) disposed concentrically of the crank shaft (16).

5. A machine according to one of claims 1 to 4, characterized in that the crank arm (16a) bears a compensating weight (30) which is disposed offset by 180 in relation to the crank pin (14, 29), referred to the axis of the crank shaft (13, 16).

6. A machine according to claim 5, characterized in that the operative crank arm length of the compensating weight (30) is greater than the operative crank arm length of the crank pin (14, 29).

**Revendications**

1. Machine pour le façonnage par rectification de pièces à travailler (2) formées du type matrice et utilisables comme poinçon ou matrice, en particulier électrodes en graphite pour le traitement par électro-érosion de pièces à travailler, avec un outil de façonnage par rectification (10) correspondant à la forme à donner à la pièce à travailler (2), mais cependant légèrement plus petit dans ses dimensions, qui peut être déplacé linéaire- ment vers le bas vers la pièce à travailler (2), avec un support (9) pour l'outil de façonnage par rectification (10) et un support (1) pour la pièce à travailler (2), ainsi qu'un entraînement (8) pour le déplacement d'inclinaison et un entraînement, formé par un mécanisme à manivelle (12), pour un déplacement circulaire du support (1) de la pièce à travailler guidé bidimentionnellement dans un plan orthogonal à la direction d'inclinaison, le rayon de la trajectoire circulaire pouvant être réglé au moyen d'un maneton de manivelle (14) du mécanisme à manivelle (12), caractérisée par le fait que l'axe du maneton à manivelle (14) s'étend par rapport à l'axe de l'arbre de manivelle (13) selon un angle différent de 0 ou 180° et le maneton de manivelle (14) peut coulisser dans le support (1) dans la direction de son axe, ainsi que l'arbre de manivelle (13) est réglable dans la direction de son axe.

2. Machine pour le façonnage par rectification de pièces à travailler (2) formées du type matrice et utilisables comme poinçon ou matrice, en particulier électrodes en graphite pour le traitement par électro-érosion de pièces à travailler, avec un outil de façonnage par rectification (10) correspondant à la forme à donner à la pièce à travailler (2), mais cependant légèrement plus petit dans ses dimensions, qui peut être déplacé linéairement vers le bas vers la pièce à travailler (2), avec un support (9) pour l'outil de façonnage par rectification (10) et un support (1) pour la pièce à travailler (2), ainsi qu'un entraînement (8) pour le déplacement d'inclinaison et un entraînement, formé par un mécanisme à manivelle pour un déplacement circulaire du support (1) de la pièce à travailler guidé bidimentionnellement dans un plan orthogonal à la direction d'inclinaison, le rayon de la trajectoire circulaire pouvant être réglé au moyen d'un maneton de manivelle (29) du mécanisme à manivelle, caractérisée par le fait qu'un engrenage planétaire composé à deux jeux de satellites (17, 18) est prévu pour régler l'excentricité du maneton de manivelle (29), qui sont montés rotatifs parallèlement à l'arbre de manivelle (16) dans une traverse montée pivotante sur lui et dont un jeu (17) est en prise par une roue solaire (20) montée fixe en rotation sur l'arbre de manivelle (16) et une roue dentée intérieure (21) fixe et disposée coaxialement à celui-ci et dont l'autre jeu (18) est en prise par une roue solaire (22) montée rotative sur l'arbre de manivelle (16) et une roue dentée intérieure (22) montée coaxiale à celui-ci et pouvant être entraînée en rotation, et qu'un pignon (24) monté pivotant dans le bras de manivelle (16a) parallèle à l'arbre de manivelle (14) est en prise avec la roue solaire (22) montée rotative, sur l'arbre (24a) duquel est logée la vis sans fin (25) d'un engrenage à vis sans fin (25, 26) dont la roue tangente (26) entraîne une broche filetée (27) déplaçant le maneton de manivelle (29) transversalement à l'arbre de manivelle (16).

3. Machine pour le façonnage par rectification de pièces à travailler (2) formées du type matrice et utilisables comme poinçon ou matrice, en particulier électrodes en graphite pour le traitement par électro-érosion de pièces à travailler, avec un outil de façonnage par rectification (10) correspondant à la forme à donner à la pièce à travailler (2), mais cependant légèrement plus petit dans ses dimensions, qui peut être déplacé linéairement vers le bas vers la pièce à travailler (2), avec un support (9) pour l'outil de façonnage par rectification (10) et un support (1) pour la pièce à travailler (2), ainsi qu'un entraînement (8) pour le déplacement d'inclinaison et un entraînement, formé par un mécanisme à manivelle, pour un déplacement circulaire du support (1) de la pièce à travailler guidé bidimentionnellement dans un plan orthogonal à la direction d'inclinaison, le rayon de la trajectoire circulaire pouvant être réglé au moyen d'un maneton de manivelle (29) du mécanisme à manivelle, caractérisée par le fait qu'un moteur de positionnement (31) pivotant solidairement avec l'arbre de manivelle (16) est prévu pour régler l'excentricité du maneton de manivelle (29), qui entraîne une broche filetée (27) déplaçant le maneton de manivelle (29) transversalement à l'arbre de manivelle (16).

4. Machine selon la revendication 3, caractérisée par le fait que le moteur de positionnement (31) est un moteur électrique à bagues glissantes (33) disposées concentriques à l'arbre de manivelle (16) pour des contacts d'amenée de courant (34) fixes.

5. Machine selon l'une des revendications 1 à 4, caractérisée par le fait que le bras de manivelle (16a) porte une masse d'équilibrage (30) qui par rapport à l'axe de l'arbre de manivelle (13, 16) est décalée de 180° par rapport au maneton de manivelle (14, 29).

6. Machine selon la revendication 5, caractérisée par le fait que la longueur active du bras de manivelle de la masse d'équilibrage (30) est plus grande que la longueur active du bras de manivelle du maneton de manivelle (14, 29).

Fig.1

Fig.2

Fig.3

Fig.4

0 131 134

Fig.5

Fig.6

Fig.7